# EUROPÄISCHE PATENTSCHRIFT

(11) **EP 3 332 485 B1**
(45) Veröffentlichungstag und Bekanntmachung des Hinweises auf die Patenterteilung: **02.01.2019**
(21) Anmeldenummer: 17729049.1
(22) Anmeldetag: 30.05.2017
(51) Int. Cl.: H04B 1/00, H04B 1/40

(54) **KRAFTFAHRZEUG MIT FUNKMODEM, FUNKMODEM UND VERFAHREN ZUM AUSTAUSCH VON KOMMUNIKATIONSDATEN**
MOTOR VEHICLE HAVING A RADIO MODEM, RADIO MODEM, AND METHOD FOR EXCHANGING COMMUNICATION DATA
VÉHICULE AUTOMOBILE ÉQUIPÉ D'UN MODEM RADIOÉLECTRIQUE, MODEM RADIOÉLECTRIQUE ET PROCÉDÉ D'ÉCHANGE DE DONNÉES DE COMMUNICATION

(30) Priorität: 14.06.2016 DE 102016007193
(43) Veröffentlichungstag der Anmeldung: 13.06.2018
(73) Patentinhaber: Audi AG, 85045 Ingolstadt (DE)
(72) Erfinder: SPEHL, Jürgen, 85139 Wettstetten (DE)
(86) Internationale Anmeldenummer: PCT/EP2017/063027
(87) Internationale Veröffentlichungsnummer: WO 2017/215908

(56) Entgegenhaltungen:
- US-A1- 2015 087 253
- US-A1- 2015 092 880

## Beschreibung

Die Erfindung betrifft ein Funkmodem für ein Kraftfahrzeug, um mittels des Kraftfahrzeugs z.B. eine Car2X-Kommunikation durchzuführen. Mittels des Funkmodems können aus Kommunikationsdaten Funksignale (Senden) und aus Funksignalen Kommunikationsdaten (Empfangen) erzeugt werden. Zu der Erfindung gehören auch ein Kraftfahrzeug mit den erfindungsgemäßen Funkmodem sowie ein Verfahren zum Austauschen von Kommunikationsdaten.

Aktuell erfordert jeder Funk-Dienst (auch als Radio-Layer bezeichnet) dedizierte Hardware in Form spezieller Mobilfunk-Modems. Mittels eines Funkmodems können in der beschriebenen Weise aus digitalen Sendedaten ein Funksignal (durch Modulation beim Senden) und aus einem Funksignal digitale Empfangsdaten (durch Demodulation beim Empfangen) erzeugt werden. Für die Kommunikation oder den Austausch von Kommunikationsdaten zwischen Kraftfahrzeugen untereinander (Car2Car, siehe auch die Internetseite https://www.car-2-car.org) oder zwischen einem Kraftfahrzeug und einer Infrastrukturkomponente, wie zum Beispiel einer Ampel oder einem Verkehrsschild, (Car2I) gibt es derzeit zwei mögliche Funkstandards, von denen einer auf einem Mobilfunkstandard (LTE - Long Term Evolution) und einer auf einem WLAN-Standard (Wireless Local Area Network) basiert. Die beschriebenen Kommunikationsdienste werden auch als Car2X oder Fahrzeug-Ad-hoc-Netzwerk zusammengefasst.

Um in einem Kraftfahrzeug universell die beschriebene Car2X-Kommunikation bereitstellen zu können, ist somit eine aufwendige Hardware nötig, die beide Kommunikationsstandards betreiben kann, also die nötigen Funkfrequenzen erzeugen bzw. empfangen kann und den zugehörigen Protokollstack zum Steuern der Kommunikation bereitstellt. Ein Protokollstack ist hierbei zumindest ein Programmmodul, mittels welchem die Kommunikationsdaten bearbeitet werden, um hierdurch eine Kommunikationsverbindung zwischen dem Kraftfahrzeug einerseits und einem Objekt in der Umgebung andererseits zu definieren. Ein Protokollstack kann zum Beispiel die Schichten des ISO-OSI-Referenzmodells (ISO - International Organization for Standardization; OSI - Open Systems Interconnection) realisieren.

Ein Kraftfahrzeug, welches zwei Kommunikationsstandards bereitstellt, ist aus der EP 2 816 851 A1 bekannt. Danach sind zwei RAT-Transceiver (RAT - Radio Access Technologie) bereitgestellt, die über einen Kommunikationsbus Sendedaten empfangen und daraus durch Modulation ein Funksignal erzeugen oder umgekehrt aus einem empfangenen Funksignal durch Demodulation Empfangsdaten erzeugen und in den Kommunikationsbus übertragen können. An den Kommunikationsbus ist auch ein digitaler Signalprozessor angeschlossen, welcher die Sendedaten erzeugt bzw. die Empfangsdaten verarbeitet. Nachteilig bei diesem Kraftfahrzeug ist, dass die Umwandlung von Sendedaten in das Funksignal bzw. aus von dem Funksignal in Empfangsdaten durch einen separaten Mischer erfolgen muss, der den Bus mit den Transceivern koppelt. Dies erfordert ein zusätzliches Bauteil und macht damit die Herstellung des Kraftfahrzeugs unerwünscht bauteilintensiv.

Aus der US 2010/0234071 A1 ist ein Kraftfahrzeug mit einem Multi-RAT-System bekannt. Durch einen Prozessor können mehrere Protokollstacks bereitgestellt werden. Zum Aussenden und Empfangen von Funksignalen sind mehrere Hochfrequenz-Schaltkreise bereitgestellt, die jeweils einen Mischer aufweisen. Dies macht die Herstellung des Systems ebenfalls Hardware-intensiv.

Aus der DE 10 2013 222 915 A1 ist ein Kraftfahrzeug bekannt, bei welchem zwei Funkmodems bereitgestellt sind, die sich eine Antenne teilen können. Das Bereitstellen von zwei Funkmodems ist ebenfalls bauteilintensiv.

Aus der US 2003/0139179 A1 ist ein Kommunikationssystem bekannt, dass mit zwei unterschiedlichen Netzwerkprotokollen ausgestattet ist. Hierzu sind zwei separate Hardware-Funkschnittstellen vorgesehen.

Aus der US 2007/0019672 A1 ist ein Kommunikationssystem bekannt, das zwischen dem Bluetooth™-Standard und dem ZigBee™-Standard umschalten kann, wobei hierzu Basisband-Module für diese beiden Kommunikationsstandards, also Hardware-Schaltkreise, vorgesehen sind. Auch die Protokollstacks sind teilweise durch das jeweilige Modul realisiert.

Aus der US 2009/0232191 A1 ist ein Kommunikationssystem bekannt, bei welchem ein digitales Kommunikationssignal mittels eines digitalen Mischers in ein digitales HF-Signal gewandelt wird, das mittels eines Digital-Analog-Konverters in ein analoges HF-Signal gewandelt wird.

Die US 2015/092880 A1 beschreibt eine Funkkommunikations-Sendevorrichtung, die mehrere Funkfrequenzbänder in einem Telekommunikationssystem übertragen kann.

Aus der US 2015/0087253 A1 ist eine Funkkommunikationsempfängervorrichtung bekannt, die konfiguriert ist, um mehrere Funkfrequenzbänder in einem Telekommunikationssystem zu verarbeiten.

Der Erfindung liegt die Aufgabe zugrunde, mit geringem Bauteilaufwand für eine Car2X-Kommunikation ein Funkmodem bereitzustellen.

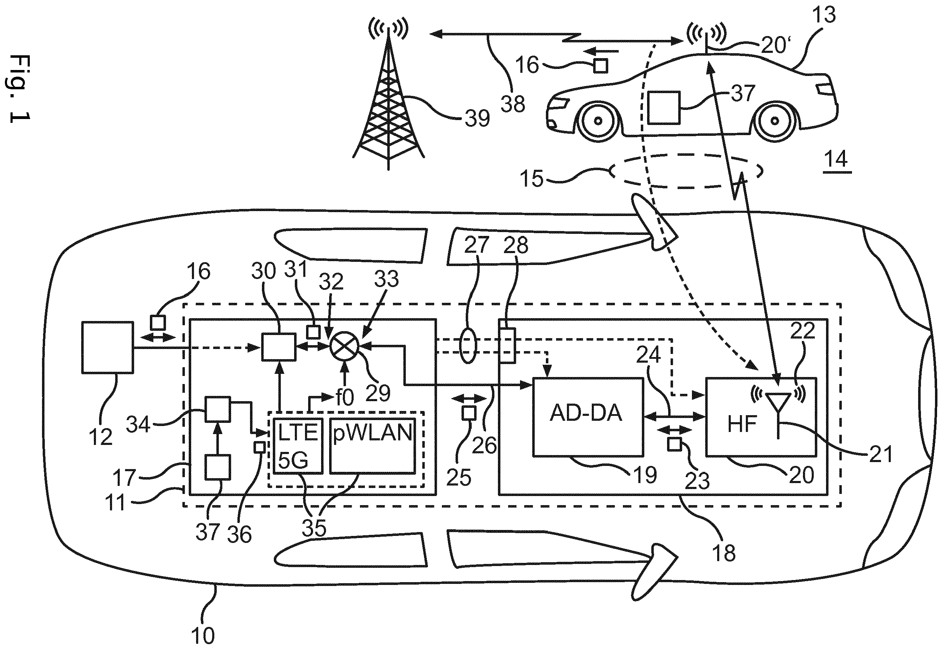

Die Aufgabe wird durch die Gegenstände der unabhängigen Patentansprüche gelöst. Vorteilhafte Weiterbildungen der Erfindung sind durch die abhängigen Patentansprüche, die folgende Beschreibung und die Figur beschrieben.

Durch die Erfindung ist ein Funkmodem für ein Kraftfahrzeug bereitgestellt. Das Funkmodem weist eine Antennenanordnung, einen mit der Antennenanordnung gekoppelten AD-DA-Wandler (Analog-Digital- und Digital-AnalogWandler) und eine Prozessoreinrichtung auf. Die Antennenanordnung kann zum bidirektionalen Wandeln zwischen einem kabelgebundenen, elektrischen HF-Signal und einem Funksignal ausgelegt sein. Die Antennenanordnung kann also zum Beispiel eine Antenne oder mehrere Antennen und optional zum Beispiel eine Verstärkerschaltung umfassen. Der AD-DA-Wandler kann zum bidirektionalen Wandeln zwischen einem digitalen Signal und einem analogen Signal ausgelegt sein. Die Prozessoreinrichtung ist dazu eingerichtet, Kommunikationsdaten zwischen dem Kraftfahrzeug und zumindest einem Objekt in einer Umgebung des Kraftfahrzeugs auszutauschen. Bei dem zumindest einen Objekt handelt es sich insbesondere um zumindest ein anderes Fahrzeug und/oder um zumindest eine Infrastrukturkomponente, also jeweils zum Beispiel eine Ampel und/oder ein Verkehrsschild mit einem Kommunikationsmodul.

Die Prozessoreinrichtung ist erfindungsgemäß dazu eingerichtet, mehrere Kommunikationsstandards bereitzustellen. Durch jeden Kommunikationsstandard ist jeweils ein digitaler Funk-Protokollstack zum Steuern der Kommunikation, also des Austauschs der Kommunikationsdaten, vorgegeben. Des Weiteren gibt jeder Kommunikationsstandard eine Funkfrequenz für das Funksignal vor. Die Funkfrequenz oder die Hochfrequenz (HF) kann hierbei zum Beispiel in einem Frequenzintervall von 600 Megahertz bis 5 Gigahertz liegen.

Die Prozessoreinrichtung nutzt zum Austauschen der Kommunikationsdaten den AD-DA-Wandler sowie die Antennenanordnung. Das Austauschen der Kommunikationsdaten kann hierbei das Aussenden zumindest eines Teils der Kommunikationsdaten an das zumindest eine Objekt und/oder das Empfangen zumindest eines Teils der Kommunikationsdaten von dem zumindest einen Objekt umfassen.

Als Kommunikationsstandards sind bevorzugt zumindest ein Mobilfunkstandard und/oder zumindest ein WLAN-Standard vorgesehen. Als Mobilfunkstandard ist insbesondere zumindest einer der folgenden bereitgestellt: 5G, LTE-vehicle, LTE-D2D, LTE-ad-hoc. Als WLAN-Standard ist insbesondere zumindest der Standard IEEE 802.11p (auch als pWLAN bezeichnet) vorgesehen.

Die Prozessoreinrichtung, im Folgenden auch Prozessor genannt, ist des Weiteren dazu eingerichtet, in Abhängigkeit von einem Auswahlsignal einer Steuereinheit aus den bereitgestellten Kommunikationsstandards einen Kommunikationsstandard auszuwählen, wodurch festgelegt ist, welcher Funk-Protokollstack zu betreiben ist und welche Funkfrequenz zu verwenden ist, und wobei die Prozessoreinrichtung dazu eingerichtet ist, den Kommunikationsstandard in der folgenden Weise umzusetzen. Durch die Prozessoreinrichtung selbst wird der Funk-Protokollstack des ausgewählten Kommunikationsstandards als Software-Modul betrieben. Hierzu kann in der beschriebenen Weise eine Anordnung aus zumindest einem Programmmodul ausgeführt werden. Des Weiteren ist erfindungsgemäß vorgesehen, dass der Prozessor einen digitalen Mischer betreibt, welcher auf einer Basisbandseite mit dem Funk-Protokollstack gekoppelt ist. Mit anderen Worten tauscht der digitale Mischer an seiner Basisbandseite digitale Daten mit dem Funk-Protokollstack aus. Der Prozessor weist also einen digitalen Mischer auf, der mit der aktuell benötigten oder eingestellten Funkfrequenz betrieben wird. Mit anderen Worten moduliert und/oder demoduliert der Mischer mit einem digitalen Modulations/Demodulations-Signal, welches die Funkfrequenz f0 aufweist.

Durch das erfindungsgemäße Funkmodem ergibt sich der Vorteil, dass keine zusätzlichen Bauteile benötigt werden, um mehrere Funk-Protokollstacks zu betreiben. Je nach ausgewähltem Kommunikationsstandard wird ein Software-Modul mit dem entsprechenden Funk-Protokollstack betrieben und durch einen digitalen Mischer eine Anbindung an die Antennenanordnung erreicht.

Zum Aussenden der Kommunikationsdaten führt das erfindungsgemäße Funkmodem hierbei das folgende, erfindungsgemäße Verfahren durch.

Durch die Prozessoreinrichtung wird in Abhängigkeit von einem Auswahlsignal aus mehreren bereitgestellten Funk-Protokollstacks einen Funk-Protokollstack ausgewählt und es werden der Funk-Protokollstack der ausgewählten Kommunikationsstandards als Software-Modul sowie ein digitaler Mischer, welcher auf einer Basisbandseite mit dem Funk-Protokollstack und auf einer HF-Seite mit einem AD-DA-Wandler gekoppelt ist, betrieben.

Eine geeignete Prozessoreinrichtung kann insbesondere dadurch bereitgestellt werden, dass der Prozessor einen Mikroprozessor (integrierter, programmierbarer Schaltkreis) und/oder einen digitalen Signalprozessor (DSP) und/oder ein FPGA (Field Programmable Gate Array) und/oder einen ASIC (Application specific integrated circuit) umfasst.

Insbesondere kann vorgesehen sein, dass die Prozessoreinrichtung und der AD-DA-Wandler als ein gemeinsamer integrierter Schaltkreis bereitgestellt sind. Dies führt zu einer besonders kompakten Bauweise des Funkmodems.

Zu der Erfindung gehören auch Weiterbildungen, durch deren Merkmale sich zusätzliche Vorteile ergeben.

Eine HF-Seite des digitalen Mischers ist bevorzugt mit dem AD-DA-Wandler gekoppelt. Die HF-Seite des digitalen Mischers sieht dabei den Betrieb mit der Funkfrequenz vor. Mit anderen Worten ist der digitale Mischer dazu eingerichtet, zum Senden aus digitalen Daten der Basisbandseite auf der HF-Seite ein digitales HF-Signal zu erzeugen, welches einen Frequenzanteil aufweist, welcher der Funkfrequenz entspricht. Des Weiteren ist der digitale Mischer dazu vorgesehen, zum Empfangen ein digitales HF-Signal von dem AD-DA-Wandler zu empfangen und dieses durch digitale Demodulation in das Basisband herunter zu mischen und die so erzeugten digitalen Daten an der Basisbandseite dem Protokollstack bereitzustellen. Der AD-DA-Wandler ist entsprechend direkt mit dem Prozessor gekoppelt. Hierdurch ist der beschriebene Austausch des digitalen HF-Signals zwischen der HF-Seite des digitalen Mischers einerseits und dem AD-DA-Wandler andererseits ermöglicht. Mit anderen Worten entspricht das digitale Signal des AD-DA-Wandlers dem digitalen HF-Signal der HF-Seite des Mischers. Der AD-DA-Wandler ist somit zwischen den Prozessor und die Antennenanordnung geschaltet. Hierdurch tauscht der AD-DA-Wandler sein analoges Signal mit der Antennenanordnung aus. Mit anderen Worten entspricht das elektrische HF-Signal der Antennenanordnung dem analogen Signal des AD-DA-Wandlers.

Bevorzugt ist vorgesehen, dass durch den Prozessor mehrere Kommunikationsstandards zugleich bereitgestellt sind und der Prozessor dazu eingerichtet ist, jeweils einen der bereitgestellten Kommunikationsstandards in Abhängigkeit von einem Auswahlsignal zu betreiben. Die Kommunikationsstandards können beispielsweise jeweils durch das entsprechende, beschriebene zumindest eine Programmmodul in einem Datenspeicher des Prozessors bereitgehalten sein. Durch die Weiterbildung ergibt sich der Vorteil, dass der Prozessor im Betrieb zwischen Kommunikationsstandards umschalten kann. Dann kann jeweils sowohl der Protokollstack bereitgestellt werden als auch die Antennenanordnung mit der zugehörigen Funkfrequenz betrieben werden.

Insbesondere ist vorgesehen, dass eine Steuereinheit bereitgestellt ist, die dazu eingerichtet ist, nacheinander jeweils einen der Kommunikationsstandards mittels des Auswahlsignals in dem Prozessor auszuwählen. Mit anderen Worten erzeugt die Steuereinheit das Auswahlsignal in der Weise, dass die Prozessoreinrichtung nacheinander einen der Kommunikationsstandards aktiviert oder umsetzt. Die Steuereinheit kann als ein Bestandteil des Prozessors bereitgestellt sein, beispielsweise als ein Programmodul. Die Steuereinheit kann auch ein von dem Prozessor verschiedenes Bauteil und/oder Steuerprogramm umfassen. Die Steuereinheit ist des Weiteren dazu eingerichtet, zu prüfen und zu signalisieren, ob mittels des aktuell ausgewählten Kommunikationsstandards der Austausch der Kommunikationsdaten mit dem Objekt erfolgreich ist. Mit anderen Worten probiert die Steuereinheit die verschiedenen Kommunikationsstandards abwechselnd oder nacheinander aus und erkennt, ob erfolgreich eine Kommunikationsverbindung zu dem zumindest einen Objekt aufgebaut werden konnte. Wie bereits ausgeführt, kann die Car2X-Kommunikation auf unterschiedlichen Kommunikationsstandards beruhen. Damit das Kraftfahrzeug mit dem zumindest einen Objekt eine Kommunikationsverbindung aufbauen kann, muss es also wissen, welchen Kommunikationsstandard es verwenden muss. Dies findet das erfindungsgemäße Funkmodem dadurch heraus, dass die Steuereinheit die bereitgestellten Kommunikationsstandards nacheinander selbstständig ausprobiert, bis eine erfolgreiche Übertragung der Kommunikationsdaten erkannt wird.

Insbesondere kann vorgesehen sein, dass die Steuereinheit dazu eingerichtet ist, die Auswahl der Kommunikationsstandards in Abhängigkeit von einer öffentlich verfügbaren Beschreibung, z.B. einer Tabelle, einzustellen. So kann in einer vorbestimmten Region, beispielsweise einem Land, durch die öffentlich verfügbaren Beschreibung eine Liste der verwendbaren oder vorgesehenen Kommunikationsstandards für Car2X-Kommunikation bereitgestellt werden. Die Steuereinheit kann dann diese Beschreibung empfangen und dazu nutzen, aus den bereitgestellten Kommunikationsstandards diejenigen auszuwählen, die für die Region vorgesehen sind.

Eine besonders bevorzugte Ausführungsform des Funkmodems sieht vor, dass der Prozessor dazu eingerichtet ist, einen Mobilfunkstandard, insbesondere LTE, bereitzustellen. Hierbei betreibt das Funkmodem allerdings in einem Standard-gemäß vorgesehenen Sendebetrieb den AD-DA-Wandler und den Mischer invers. Mit anderen Worten ist das Funkmodem bevorzugt dazu eingerichtet, aus einem Uplink-Kanal, welcher zum Aussenden an eine Basisstation vorgesehen ist, die Kommunikationsdaten zu empfangen. Hierdurch empfängt das Funkmodem Kommunikationsdaten, die von dem Objekt über den Uplink-Kanal ausgesendet sind, unter Umgehung der Basisstation. Mit anderen Worten empfängt das Modell in dem Uplink-Kanal die Kommunikationsdaten des zumindest einen Objekts ab oder hört sie ab. Hierdurch kann auf der Grundlage eines Mobilfunkstandards eine direkte Kommunikation oder ein direkter Datenaustausch zwischen dem Kraftfahrzeug einerseits und dem zumindest einen Objekt andererseits erfolgen, ohne dass hierzu eine Basisstation nötig ist. Bei einem Kommunikationsstandard, der dieselbe Funkfrequenz für Senden und Empfangen vorsieht und hierbei eine Zeitmultiplexing für Sende- und Empfangszeiten angibt, kann das Funkmodem entsprechen zu Sendezeiten auf Empfang geschaltet werden, um die Kommunikationsdaten ohne die Basisstation zu erhalten.

Zu der Erfindung gehört auch ein Kraftfahrzeug, welches das erfindungsgemäße Funkmodem aufweist. Das erfindungsgemäße Kraftfahrzeug ist bevorzugt als Kraftwagen, insbesondere als Personenkraftwagen oder Lastkraftwagen, ausgestaltet.

Zu der Erfindung gehören schließlich auch Weiterbildungen des erfindungsgemäßen Verfahrens, die Merkmale aufweisen, wie sie bereits im Zusammenhang mit den Weiterbildungen des erfindungsgemäßen Funkmodems beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich beispielsweise um einen Kraftwagen insbesondere einen Personenkraftwagen, handeln kann. Das Kraftfahrzeug 10 kann ein Funkmodem 11 aufweisen, über welches eine Fahrzeugkomponente 12 mit zumindest einem Objekt 13 in einer Umgebung 14 des Kraftfahrzeugs 10 eine Kommunikationsverbindung 15 zum Austauschen von Kommunikationsdaten 16 herstellen oder aufbauen oder betreiben kann. Bei der Fahrzeugkomponente 12 kann es sich zum Beispiel um ein Fahrerassistenzsystem oder ein Infotainmentsystem (Informations-Unterhaltungssystem) sein. Bei den Kommunikationsdaten 16 kann es sich beispielsweise um Positionsdaten und/oder Manöverdaten zum Beschreiben eines geplanten oder gerade durchgeführten Fahrmanövers handeln. Das Objekt 13 kann zum Beispiel ein weiteres Fahrzeug oder eine Infrastrukturkomponente eines Verkehrswegenetzes sein.

Das Funkmodem 11 kann einen Prozessor 17 und ein Antennenelement 18 umfassen oder aufweisen. Bei dem Prozessor 17 kann es sich zum Beispiel um einen digitalen Signalprozessor oder einen Mikroprozessor oder eine Kombination aus mehreren Rechnern handeln. Das Antennenelement 18 kann einen AD-DA-Wandler 19 und eine Antennenanordnung 20 aufweisen. Die Antennenanordnung 20 kann zum Beispiel eine Antenne 21 oder mehrere Antennen umfassen. Mittels der Antenne 21 können Funksignale 22 mit einer Antennenanordnung 20' des Objekts 13 ausgetauscht werden. Funksignale 22 sind hier insbesondere elektromagnetische Wellen, die ihr Spektrum in einem Frequenzbereich von zum Beispiel 600 Megahertz bis 5 Gigahertz aufweisen können. Es handelt sich somit um hochfrequente (HF) Funkwellen. Die Antennenanordnung 20 wandelt zwischen den Funkwellen 22 und einem elektrischen HF-Signal 23, das über eine elektrische Leitung 24, zum Beispiel ein Koaxialkabel, von dem AD-DA-Wandler 19 hin zur Antennenanordnung 20 (Senden) oder von der Antennenanordnung 20 zu dem AD-DA-Wandler 19 (Empfangen) übertragen werden kann. Der AD-DA-Wandler wandelt zwischen dem analogen HF-Signal 23 und einem korrespondierenden digitalen HF-Signal 25, welches der AD-DA-Wandler mit dem Prozessor 17 über eine Datenverbindung 26 austauschen oder übertragen kann. Die Datenverbindung 26 kann zum Beispiel eine Datenrate in einem Bereich von 10 Gigabit pro Sekunde bis 25 Gigabit pro Sekunde aufweisen. Die Datenverbindung kann elektrisch oder optisch sein.

Der Prozessor 17 kann des Weiteren über Steuerleitungen 27 mit einer Steuerschnittstelle 28 des Antennenelements 18 verbunden sein, um zum Beispiel eine Abtastrate des AD-DA-Wandlers einzustellen und/oder die Antennenanordnung 20 an eine aktuell verwendete Funkfrequenz anzupassen oder zu tunen.

Das analoge Signal des AD-DA-Wandlers kann direkt zum Betreiben der Antennenanordnung 20 genutzt werden. Denn das digitale HF-Signal 25 kann bereits die Frequenzanteile aufweisen, die einer Funkfrequenz f0 des Funksignals 22 entsprechen. Mit anderen Worten ist kein separater, analoger Mischer oder Mixer oder Frequenzumsetzer nötig.

Hierzu weist der Prozessor 17 einen digitalen Mischer 29 auf, der mit der aktuell benötigten oder eingestellten Funkfrequenz f0 betrieben wird. Mit anderen Worten moduliert und/oder demoduliert der Mischer 29 mit einem digitalen Modulations/Demodulations-Signal, welches die Funkfrequenz f0 aufweist.

Um die Kommunikationsverbindung 15 mit dem Objekt 13 aufzubauen, ist des Weiteren nötig, ein Kommunikationsprotokoll einzuhalten oder zu befolgen, damit die gesendeten Kommunikationsdaten korrekt durch das Objekt 13 und das Kraftfahrzeug 10 interpretiert werden können. Hierzu ist in dem Prozessor 17 ein Kommunikationsstack oder Protokollstack 30 bereitgestellt, welcher die Kommunikationsdaten 16 mit der Fahrzeugkomponente 12 austauschen kann und welcher gemäß dem Kommunikationsprotokoll verarbeitete Basisbanddaten 31 mit einer Basisband-Seite 32 des Mischers 29 austauscht. Auf einer HF-Seite 33 wird das digitale HF-Signal 25 über die Datenverbindung 26 ausgetauscht.

Welcher Protokollstack 30 betrieben wird und welche Funkfrequenz f0 durch den Mischer 29 verwendet wird, kann in dem Prozessor 17 durch eine Steuereinheit 34 festgelegt werden. Z.B. können der Protokollstack 30 und Funkfrequenzen f0 für mehrere unterschiedliche Kommunikationsstandards 35 in den Prozessor 17 bereitgestellt sein, von denen jeweils einer durch ein Auswahlsignal 36 der Steuereinheit 34 festgelegt oder ausgewählt werden kann. Hierzu kann eine Beschreibung z.B. in Form einer Tabelle 37 bereitgestellt sein, mit der auch zum Beispiel das Objekt 13 betrieben werden kann. Hierdurch können sich das Kraftfahrzeug 10 und das Objekt 13 durch Ausprobieren oder Prüfen der in der Tabelle 37 festgelegten Kommunikationsstandards 35 abstimmen, bis ein gemeinsamer Kommunikationsstandard 25 eingestellt oder gefunden ist.

Ein möglicher Kommunikationsstandard ist ein Mobilfunkstandard, wie zum Beispiel LTE 5G. Durch diesen Mobilfunkstandard ist insbesondere ein Uplink-Kanal 38 definiert, über welchen zum Beispiel das Objekt 13 in Richtung zu einer Basisstation 39 eines Mobilfunknetzes aussenden kann. Das Funkmodem 11 kann dazu eingerichtet sein, als Funkfrequenz f0 für einen Empfang die Funkfrequenz des Uplink-Kanals 38 einzustellen und hierdurch die in dem Uplink-Kanal 38 ausgesendeten Kommunikationsdaten 16 des Objekts 13 ebenfalls zu empfangen und direkt, ohne die Basisstation 39 zu benötigen, der Fahrzeugkomponente 12 als empfangene Kommunikationsdaten 16 bereitzustellen. Das Funkmodem wird damit bei der Funkfrequenz f0 invers betrieben, nämlich nicht als Sender, sondern als Empfänger. Bei einem Kommunikationsstandard, der dieselbe Funkfrequenz für Senden und Empfangen vorsieht und hierbei eine Zeitmultiplexing für Sende- und Empfangszeiten angibt, kann das Funkmodem entsprechen zu Sendezeiten auf Empfang geschaltet werden, um die Kommunikationsdaten 16 ohne die Basisstation 39 zu erhalten.

Somit besteht bei dem Kraftfahrzeug 10 die Grundidee darin, ein Funkmodem 11, welches eine universelle Funkschnittstelle oder Radio-Schnittstelle nachgebildet, multifunktional auszulegen. Hierdurch kann die Hardware mindestens zwei aktuell konkurrierende Kommunikationsstandards oder Funkstandards für die zukünftige Car2X-Kommunikation (nämlich pWLAN und 5G LTE-vehicle) abdecken. Durch Programmmodule des Prozessors 17 kann dann eingestellt werden, welcher der Kommunikationsstandards zu einem bestimmten Zeitpunkt betrieben wird. Durch das beschriebene universelle Funkmodem kann mittels des schnellen, breitbandigen AD-DA-Wandlers und der Vorverarbeitung durch den Protokollstack 30 per Software konfiguriert werden, gemäß welchem Kommunikationsstandard die Funkverbindung 15 aufgebaut wird.

Somit können mehrere Infotainment- und/oder Kommunikationsdienste, bevorzugt auch Car2Car-Kommunikation und Fahrerassistenz-Funktionen, in einem Fahrzeugsteuergerät implementiert werden und hierzu sogenanntes SDR (software defined radio) verwendet werden, das adaptiv unterschiedliche Kommunikationsstandards betreiben kann, anstatt mehrere dedizierte Silizium-Chips zu verwenden.

So kann auch schon beim Bereitstellen oder Herstellen eines Kraftfahrzeugs entschieden werden, die Car2Car-Kommunikation nach dem pWLAN-Standard oder nach dem Mobilfunkstandard 5G zu betreiben. Dies kann beispielsweise in den Prozessor 17 fest einprogrammiert werden, sodass nur Programmmodule für jeweils einen Kommunikationsstandard bereitgestellt werden müssen. Es kann aber auch vorgesehen sein, mittels der Steuereinheit 34 mehrere Kommunikationsstandards 35 auswählbar zu machen.

Um auch den Uplink-Kanal 38 eines Mobilfunkstandards nutzen zu können, wie er im Mobilfunkstandard LTE vorgesehen ist, kann ein Broadcast-ad hoc-Modus realisiert werden, der den beschriebenen Kanalzugriff über CSMA/CA auf den Uplink-Kanal 38 vorsieht.

Insgesamt zeigt das Beispiel, wie durch die Erfindung ein LTE-5G Multi-RAT-Modem für zukünftige Car2X-Systeme bereitgestellt werden kann.

## Patentansprüche

1. Funkmodem (11) für ein Kraftfahrzeug (10), aufweisend:
- eine Antennenanordnung (20),
- einen mit der Antennenanordnung (20) gekoppelten Analog-Digital- und Digital-Analog-Wandler, AD-DA-Wandler, (19),
- eine digitale Prozessoreinrichtung (17) zum Austauschen von Kommunikationsdaten (16) zwischen dem Kraftfahrzeug (10) und zumindest einem Objekt (13) in einer Umgebung (14) des Kraftfahrzeugs (10), wobei
die digitale Prozessoreinrichtung (17) dazu eingerichtet ist, mehrere Kommunikationsstandards (35), welche jeweils einen digitalen Funk-Protokollstack (30) und eine Funkfrequenz (f0) für ein Funksignal (22) vorgeben, bereitzustellen und die digitale Prozessoreinrichtung (17) dazu eingerichtet ist, einen der bereitgestellten Kommunikationsstandards (35) in Abhängigkeit von einem Auswahlsignal (36) einer Steuereinheit (34) auszuwählen, und hierdurch festgelegt ist, welcher Funk-Protokollstack (30) zu betreiben ist und welche Funkfrequenz (f0) zu verwenden ist, wobei die digitale Prozessoreinrichtung (17) dazu eingerichtet ist, den ausgewählten Kommunikationsstandard (35) umzusetzen durch Betreiben des zugehörigen Funk-Protokollstacks (30) als Software-Modul und durch Betreiben eines digitalen Mischers (29) der digitalen Prozessoreinrichtung (17) mit der aktuell benötigten Funkfrequenz (f0), indem der digitale Mischer (29) dazu eingerichtet ist, mit einem digitalen Modulations/Demodulations-Signal, welches die Funkfrequenz (f0) aufweist, zu modulieren und/oder demodulieren, wobei der digitale Mischer (29) auf einer Basisbandseite (32) mit dem Funk-Protokollstack (30) und auf einer Hochfrequenz, HF, -Seite (33) mit dem AD-DA-Wandler (19) gekoppelt ist.

2. Funkmodem (11) nach Anspruch 1, wobei der digitale Mischer dazu eingerichtet ist, auf der HF-Seite (33) ein digitales HF-Signal zu erzeugen, welches einen Frequenzanteil aufweist, welcher der Funkfrequenz (f0) des ausgewählten Kommunikationsstandards entspricht, und der AD-DA-Wandler (19) direkt zwischen den digitalen Mischer (29) und die Antennenanordnung (20) geschaltet ist, so dass er sein digitales Signal (25) mit der HF-Seite (33) des Mischers (29) und sein analoges Signal (23) als elektrisches, analoges HF-Signal (23) mit der Antennenanordnung (20) austauscht.

3. Funkmodem (11) nach einem der vorhergehenden Ansprüche, wobei die Steuereinheit (34) bereitgestellt ist, die dazu eingerichtet ist, nacheinander jeweils einen der Kommunikationsstandards (35) mittels des Auswahlsignals (36) auszuwählen und zu überprüfen und zu signalisieren, ob mittels des aktuell ausgewählten Kommunikationsstandards (35) der Austausch der Kommunikationsdaten (16) mit dem zumindest einen Objekt (13) erfolgreich ist.

4. Funkmodem (11) nach Anspruch 3, wobei die Steuereinheit (34) dazu eingerichtet ist, die Auswahl der Kommunikationsstandards (35) in Abhängigkeit von einer öffentlich verfügbaren Beschreibung (37) der in einer Region verwendbaren oder vorgesehenen Kommunikationsstandards einzustellen.

5. Funkmodem (11) nach einem der vorhergehenden Ansprüche, wobei der zumindest eine Kommunikationsstandard (35) zumindest einen Mobilfunkstandard, insbesondere 5G, LTE-vehicle, LTE-D2D, LTE-ad-hoc, und/oder zumindest einen WLAN-Standard, insbesondere den Standard IEEE 802.11p, pWLAN, umfasst.

6. Funkmodem (11) nach einem der vorhergehenden Ansprüche, wobei das Funkmodem (11) dazu eingerichtet ist, einen Mobilfunkstandard (35), insbesondere LTE, bereitzustellen und aus einem Uplink-Kanal (38), welcher zum Aussenden an eine Basisstation (39) vorgesehen ist, die Kommunikationsdaten (16) zu empfangen und hierdurch die von dem zumindest einen Objekt (13) über den Uplink-Kanal (38) ausgesendete Kommunikationsdaten (16) unter Umgehung der Basisstation (39) direkt zu empfangen.

7. Funkmodem (11) nach einem der vorhergehenden Ansprüche, wobei die digitale Prozessoreinrichtung (17) einen Mikroprozessor und/oder DSP und/oder FPGA und/oder ASIC umfasst.

8. Funkmodem (11) nach einem der vorhergehenden Ansprüche, wobei die digitale Prozessoreinrichtung (17) und der AD-DA-Wandler (19) als ein gemeinsamer integrierter Schaltkreis bereitgestellt sind.

9. Kraftfahrzeug (10) mit einem Funkmodem (11) nach einem der vorhergehenden Ansprüche.

10. Verfahren zum Austauschen von Kommunikationsdaten (16) zwischen einem Kraftfahrzeug (10) und zumindest einem Objekt (13) in der Umgebung (14) des Kraftfahrzeugs (10), wobei durch eine digitale Prozessoreinrichtung (17) in Abhängigkeit von einem Auswahlsignal (36) einer Steuereinheit (34) aus mehreren bereitgestellten Kommunikationsstandards ein Kommunikationsstandard ausgewählt wird, und hierdurch festgelegt wird, welcher Funk-Protokollstack (30) zu betreiben ist und welche Funkfrequenz (f0) zu verwenden ist, und der Funk-Protokollstack (30) der ausgewählten Kommunikationsstandards (35) als Software-Modul betrieben wird und ein digitaler Mischer (29) mit der aktuell benötigten Funkfrequenz (f0) betrieben wird, indem der digitale Mischer (29) mit einem digitalen Modulations/Demodulations-Signal, welches die Funkfrequenz (f0) aufweist, moduliert und/oder demoduliert, wobei der digitale Mischer (29) auf einer Basisbandseite (32) mit dem Funk-Protokollstack (30) und auf einer HF-Seite (33) mit einem AD-DA-Wandler (19) gekoppelt ist.

## Claims

1. Radio modem (11) for a motor vehicle (10), having:
- an antenna arrangement (20),
- an analogue-to-digital and digital-to-analogue converter, AD-DA converter, (19) coupled to the antenna arrangement (20),
- a digital processor device (17) to exchange communication data (16) between the motor vehicle (10) and at least one object (13) in a surrounding environment (14) of the motor vehicle (10), wherein
the digital processor device (17) is configured to provide several communication standards (35) which provide a digital radio protocol stack (30) and a radio frequency (f0) for a radio signal (22), and the digital processor device (17) is configured to select one of the provided communication standards (35) depending on a selection signal (36) of a control unit (34), and it is hereby determined which radio protocol stack (30) is to be operated and which radio frequency (f0) is to be used, wherein
the digital processor device (17) is configured to implement the selected communication standard (35) by operating the associated radio protocol stack (30) as a software module and by operating a digital mixer (29) of the digital processor device (17) with the currently required radio frequency (f0), in that the digital mixer (29) is configured to modulate and/or demodulate using a digital modulation/demodulation signal which has the radio frequency (f0), wherein the digital mixer (29) is coupled to the radio protocol stack (30) on a baseband side (32) and to the AD-DA converter (19) on a high frequency, HF, side (33).

2. Radio modem (11) according to claim 1, wherein the digital mixer is configured to generate a digital HF signal on the HF side (33), which has a frequency share which corresponds to the radio frequency (f0) of the selected communication standard, and the AD-DA converter (19) is switched directly between the digital mixer (29) and the antenna arrangement (20), such that it exchanges its digital signal (25) with the HR side (33) of the mixer (29) and its analogue signal (23) with the antenna arrangement (20) as an electrical, analogue HF signal (23).

3. Radio modem (11) according to any one of the preceding claims, wherein the control unit (34) is provided, which is configured to select, one after the other, one of the communication standards (35) respectively by means of the selection signal (36) and to check and to signal whether, by means of the currently selected communication standard (35), the exchange of the communication data (16) with the at least one object (13) is successful.

4. Radio modem (11) according to claim 3, wherein the control unit (34) is configured to set the selection of the communication standards (35) depending on a publicly available description (37) of the communication standards able to be used and provided in one region.

5. Radio modem (11) according to any one of the preceding claims, wherein the at least one communication standard (35) comprises at least one mobile radio standard, in particular 5G, LTE vehicle, LTE D2D. LTE ad hoc, and/or at least one WLAN standard, in particular the standard IEEE 802.11P, pWLAN.

6. Radio modem (11) according to any one of the preceding claims, wherein the radio modem (11) is configured to provide a mobile radio standard (35), in particular LTE, and to receive the communication data (16) from an uplink channel (38) which is provided to transmit to a base station (39) and hereby directly to receive the communication data (16) transmitted from the at least one object (13) via the uplink channel (38) by bypassing the base station (39).

7. Radio modem (11) according to any one of the preceding claims, wherein the digital processor device (17) comprises a microprocessor and/or DSP and/or FPGA and/or ASIC.

8. Radio modem (11) according to any one of the preceding claims, wherein the digital processor device (17) and the AD-DA converter (19) are provided as a mutually integrated circuit.

9. Motor vehicle (10) having a radio modem (11) according to any one of the preceding claims.

10. Method to exchange communication data (16) between a motor vehicle (10) and at least one object (13) in the surrounding environment (14) of the motor vehicle (10), wherein a communication standard is selected from several provided communication standards by a digital processor device (17) depending on a selection signal (36) of a control unit (34), and hereby it is determined which radio protocol stack (30) is to be operated and which radio frequency (f0) is to be used, and the radio protocol stack (30) of the selected communication standards (35) is operated as a software module and a digital mixer (29) is operated with the currently required radio frequency (f0), in that the digital mixer (29) is modulated and/or demodulated with a digital modulation/demodulation signal which has the radio frequency (f0), wherein the digital mixer (29) is coupled to the radio protocol stack (30) on a baseband side (32) and to an AD-DA converter (19) on an HF side (33).

## Revendications

1. Modem radio (11) pour un véhicule automobile (10), présentant :
- un ensemble d'antennes (20),
- un convertisseur analogique-numérique et numérique-analogique, convertisseur AN-NA (19), couplé à l'ensemble d'antennes (20),
- un dispositif de processeur (17) numérique servant à échanger des données de communication (16) entre le véhicule automobile (10) et au moins un objet (13) dans un environnement (14) du véhicule automobile (10), dans lequel
le dispositif de processeur (17) numérique est mis au point pour fournir plusieurs normes de communication (35), qui spécifient respectivement une pile de protocoles radio (30) numérique et une fréquence radio (f0) pour un signal radio (22) et le dispositif de processeur (17) numérique est mis au point pour sélectionner une des normes de communication (35) fournies en fonction d'un signal de sélection (36) d'une unité de commande (34), ce qui permet de fixer la pile de protocoles radio (30) qui doit être exploitée et la fréquence radio (f0) qui doit être utilisée,
dans lequel
le dispositif de processeur (17) numérique est mis au point pour mettre en oeuvre la norme de communication (35) sélectionnée en faisant fonctionner la pile de protocoles radio (30) associée en tant que module logiciel et en exploitant un mixeur (29) numérique du dispositif de processeur (17) numérique avec la fréquence radio (f0) requise de manière instantanée, en ce que le mixeur (29) numérique est mis au point pour moduler et/ou démoduler avec un signal de modulation/démodulation numérique, qui présente la fréquence radio (f0), dans lequel le mixeur (29) numérique est couplé sur un côté de bande de base (32) à la pile de protocoles radio (30) et sur un côté haute fréquence HF (33) au convertisseur AN-NA (19).

2. Modem radio (11) selon la revendication 1, dans lequel le mixeur numérique est mis au point pour générer sur le côté HF (33) un signal HF numérique, qui présente une part de fréquence, qui correspond à la fréquence radio (f0) de la norme de communication sélectionnée, et le convertisseur AN-NA (19) est commuté directement entre le mixeur (29) numérique et l'ensemble d'antennes (20), de sorte qu'il échange son signal numérique (25) avec le côté HF (33) du mixeur (29) et son signal analogique (23) en tant que signal HF (23) électrique analogique avec l'ensemble d'antennes (20).

3. Modem radio (11) selon l'une quelconque des revendications précédentes, dans lequel l'unité de commande (34) est fournie, qui est configurée pour sélectionner les unes après les autres respectivement une des normes de communication (35) au moyen du signal de sélection (36) et pour surveiller et signaler si l'échange des données de communication (16) avec l'au moins un objet (13) est réalisé avec succès au moyen de la norme de communication (35) sélectionnée instantanément.

4. Modem radio (11) selon la revendication 3, dans lequel l'unité de commande (34) est mise au point pour régler la sélection des normes de communication (35) en fonction d'une description (37) disponible au public des normes de communication pouvant être utilisées ou prévues dans une région.

5. Modem radio (11) selon l'une quelconque des revendications précédentes, dans lequel l'au moins une norme de communication (35) comprend au moins une norme radio mobile, en particulier 5G, LTE-vehicle, LTE-D2D, LTE-ad-hoc, et/ou au moins une norme WLAN, en particulier la norme IEEE 802.11p, pWLAN.

6. Modem radio (11) selon l'une quelconque des revendications précédentes, dans lequel le modem radio (11) est mis au point pour fournir une norme radio mobile (35), en particulier la LTE, et pour recevoir depuis un canal de liaison montante (38), qui est prévu pour envoyer à une station de base (39) les données de communication (16) et pour recevoir ainsi directement les données de communication (16) envoyées par l'au moins un objet (13) par l'intermédiaire du canal de liaison montante (38) en contournant la station de base (39).

7. Modem radio (11) selon l'une quelconque des revendications précédentes, dans lequel le dispositif de processeur (17) numérique comprend un microprocesseur et/ou un protocole DSP (traitement de signal numérique) et/ou un réseau FPGA (réseau de portes programmables in situ) et/ou un circuit ASIC.

8. Modem radio (11) selon l'une quelconque des revendications précédentes, dans lequel le dispositif de processeur (17) numérique et le convertisseur AN-NA (19) sont fournis en tant qu'un circuit de commutation intégré commun.

9. Véhicule automobile (10) avec un modem radio (11) selon l'une quelconque des revendications précédentes.

10. Procédé servant à échanger des données de communication (16) entre un véhicule automobile (10) et au moins un objet (13) dans l'environnement (14) du véhicule automobile (10), dans lequel une norme de communication est sélectionnée par un dispositif de processeur (17) numérique en fonction d'un signal de sélection (36) d'une unité de commande (34) parmi plusieurs normes de communication fournies, ce qui permet de fixer ainsi la pile de protocoles radio (30) qui doit être exploitée et la fréquence radio (f0) qui doit être utilisée, et la pile de protocoles radio (30) des normes de communication (35) sélectionnées est exploitée en tant qu'un module de logiciel et un mixeur (29) numérique est exploité avec la fréquence radio (f0) requise instantanément, en ce que le mixeur (29) numérique module et/ou démodule avec un signal de modulation/démodulation numérique, qui présente la fréquence radio (f0), dans lequel le mixeur (29) numérique est couplé sur un côté de bande de base (32) à la pile de protocoles radio (30) et sur un côté HF (33) à un convertisseur AN-NA (19).
